# EUROPÄISCHE PATENTSCHRIFT

(11) **EP 3 403 497 B1**
(45) Veröffentlichungstag und Bekanntmachung des Hinweises auf die Patenterteilung: **25.09.2019**
(21) Anmeldenummer: 18401043.7
(22) Anmeldetag: 18.04.2018
(51) Int. Cl.: A01M 7/00

(54) **MEHRFACHDÜSENKÖRPER**
MULTIPLE NOZZLE BODY
CORPS À BUSES MULTIPLES

(30) Priorität: 16.05.2017 DE 102017110564
(43) Veröffentlichungstag der Anmeldung: 21.11.2018
(73) Patentinhaber: Amazonen-Werke H. Dreyer GmbH & Co. KG, 49205 Hasbergen (DE)
(72) Erfinder: Dembeck, Achim, 49134 Wallenhorst-Rulle (DE)

(56) Entgegenhaltungen:
- EP-A1- 2 957 346
- EP-A2- 2 570 027
- WO-A1-2014/067785
- US-A- 4 613 080

## Beschreibung

Die Erfindung betrifft einen Mehrfachdüsenkörper gemäß dem Oberbegriff des Patentanspruches 1.

Ein derartiger Mehrfachdüsenkörper ist in WO 2014/067785 A1 beschrieben. Dieser Mehrfachdüsenkörper ist zur Anordnung an einem sich quer zur Fahrtrichtung der Feldspritze erstreckenden Spritzgestänge einer landwirtschaftlichen Feldspritze vorgesehen. An dem Spritzgestänge ist zumindest eine als Flüssigkeitsleitung ausgebildete Zuleitung angeordnet. Von der Zuleitung zweigt jeweils im Bereich der Anordnung des Mehrfachdüsenkörpers eine Zuflussleitung mit einem Übergabeanschluss ab. Der Mehrfachdüsenkörper ist über den Übergabeanschluss an die Zuleitung angeschlossen. Auf der Unterseite des Hauptgehäuses ist ein um seine zentrale Drehachse frei drehbarer und in verschiedene Positionen einstellbarer Ausbringelementeträger angeordnet. Der Ausbringelementeträger weist mehrere wahlweise mit dem Übergabeanschluss der Zuflussleitung für die jeweilige Ausbringposition verbindbare und jeweils einen Übernahmeanschluss aufweisende Verbindungsleitungen auf. Die Verbindungsleitungen münden jeweils an den freien Enden von an der Unterseite des Ausbringelementeträgers angeordneten Kupplungsstutzen zur Anordnung von Ausbringelementen aus. Diese Ausbringelemente können beispielsweise Spritzdüsen mit verschiedenen Ausbringcharakteristiken sein.

Üblicherweise sind die Mehrfachdüsenkörper in einem Abstand von 50 cm zueinander an in dem Spritzgestänge angeordnet. Für viele Einsatzfälle ist dieser Abstand von 50 cm der aktiv an dem jeweiligen Mehrfachdüsenkörper eingeschalteten als Spritzdüse ausgebildeten Ausbringelementen ausreichend. In manchen Fällen ist es jedoch erforderlich, dass die Ausbringelemente in einem Abstand von 25 cm zueinander angeordnet sind, um in besonderen Fällen mit entsprechenden speziellen Ausbringelementen in gewünschter Weise die auszubringenden Flüssigkeiten auf der Kulturfläche ausbringen zu können. Dieses ist mit dem hier vorgeschlagenen Mehrfachdüsenkörper nur möglich, wenn diese auch in einem Abstand von 25 cm an dem Spritzgestänge angeordnet sind. Hierzu müssen jedoch die relativ teuren Mehrfachdüsenkörper in doppelter Anzahl an dem Spritzgestänge angeordnet werden.

Durch die EP 2 570 027 A2 werden Mehrfachdüsenkörper vorgeschlagen, die in einem Abstand von 50 cm zueinander an einem Spritzgestänge angeordnet sind. Diese Mehrfachdüsenkörper weisen zumindest ein zentral angeordnetes Ausbringelement sowie seitlich neben dem Mehrfachdüsenkörper in einem Abstand von 25 cm angeordnete zusätzliche Ausbringelemente auf. Diesem Mehrfachdüsenkörper sind in dem Hauptgehäuse angeordnete und von einer motorisch drehbaren Nockenscheibe betätigte Ventilelemente zugeordnet. Über diese Ventilelemente kann die Flüssigkeitszufuhr zu den verschiedenen dem Mehrfachdüsenkörper zugeordneten Ausbringelementen wahlweise zugeschaltet oder abgeschaltet werden. An dem Mehrfachdüsenkörper sind in verschiedenen Abständen zueinander die Ausbringelemente angeordnet, so dass auch Ausbringelemente in einem Abstand von 25 cm zueinander zugeschaltet werden können. Dieser Mehrfachdüsenkörper ist jedoch aufgrund seiner Ausgestaltung sehr aufwändig und relativ teuer. Außerdem ist die Anzahl der an einem Mehrfachdüsenkörper anzuordnenden Ausbringelementen, die in einem Abstand von 50 cm zueinander angeordnet sind, sehr begrenzt.

Der Erfindung liegt die Aufgabe zu Grunde, einen Mehrfachdüsenkörper mit um eine zentrale Drehachse frei drehbaren und in verschiedene Positionen einstellbaren Ausbringelementeträger mit einer Mehrzahl von Ausbringelementen mit zusätzlichem in einem größeren Abstand zueinander angeordneten Ausbringelementen geschaffen wird, wobei die verschiedenen Ausbringelemente durch Verdrehen des Ausbringelementeträgers zu- oder abgeschaltet werden können.

Diese Aufgabe der erfindungsgemäß dadurch gelöst, dass in dem Ausbringelementeträger eine Eingangsöffnung und Ausgangsöffnung aufweisende Bypassleitung angeordnet ist, dass in dem Hauptgehäuse eine Zusatzabgangsöffnung mit sich daran anschließenden in zwei Zweigleitungen verzweigende und sich in diametral entgegengesetzter Richtung weisende Zusatzabgangsleitungen angeordnet ist, dass an den freien Enden der jeweiligen Zusatzabgangsleitung jeweils zumindest ein Kupplungsstutzen zur Anordnung von Ausbringelementen angeordnet ist, dass die Kupplungsstutzen jeweils in einem Abstand von 12,5 cm zu der Drehachse des verdrehbaren Ausbringelementeträgers angeordnet sind.

Infolge dieser Maßnahmen wird ein Mehrfachdüsenkörper geschaffen, der in einem Abstand von 50 cm zu dem benachbarten Mehrfachdüsenkörper an einem Spritzgestänge angeordnet wird und zusätzlich zu den zentral an dem Mehrfachdüsenkörper angeordneten Ausbringelementen in einem Abstand von 25 cm an dem Mehrfachdüsenkörper angeordnete Ausbringelemente aufweist. Diese zusätzlichen seitlichen Ausbringelemente lassen sich durch die in dem Ausbringelementeträger angeordnete Bypassleitung in einfacher Weise zu schalten, indem die Bypassleitung mit der Zuleitung und der zusätzlichen Abgangsöffnung in dem Hauptgehäuse mit diesen seitlichen Ausbringelementen verbunden wird, so dass diesen seitlichen Ausbringelementen die auszubringende Flüssigkeit zugeführt werden kann.

Bei einer Anordnung von Mehrfachdüsenkörpern in einem Abstand von 50 cm zueinander an dem Spritzgestänge lässt sich ein geringer benachbarter Abstand von aktiven Ausbringelementen, über welche die auszubringende Flüssigkeit ausgebracht wird, dadurch in einfacher Weise realisieren, dass die den Zusatzabgangsleitungen eines Mehrfachdüsenkörpers zugeordneten Kupplungsstutzen zumindest einen Abstand von 25cm zueinander aufweisen.

Eine einfache Ausgestaltung und Anordnung der Übernahmeanschlüsse und deren Aktivierung und Deaktivierung zur Zu- und Abschaltung der Flüssigkeitszufuhr zu den verschiedenen an dem Mehrfachdüsenkörper angeordneten Ausbringelementen wird in einfacher und vorteilhafter Weise dadurch realisiert, dass vier Kupplungsstutzen und die zugeordneten Übernahmeanschlüsse aufweisenden Verbindungsleitungen zumindest annähernd gleichmäßig auf einem Kreis verteilt an dem Ausbringelementeträger angeordnet sind, dass die Eingangsöffnung und die Ausgangsöffnung der Bypassleitung ebenfalls auf dem Kreis, auf dem die Übernahmeanschlüsse der Verbindungsleitungen für die Kupplungsstutzen liegen, angeordnet sind, und dass der Übergabeanschluss und die Zusatzabgangsöffnung ebenfalls auf dem Kreis, auf dem die Übernahmeanschlüsse der Verbindungsleitungen für die Kupplungsstutzen liegen, angeordnet sind.

Eine besonders vorteilhafte Anordnung der verschiedenen Leitungs- und Übergabeelemente für die Zuleitung von der auszubringenden Flüssigkeit zu den jeweiligen Ausbringelementen wird dadurch erreicht, dass der Übergabeanschluss und die Zusatzabgangsöffnung in dem Hauptgehäuse sowie die Eingangsöffnung und die Ausgangsöffnung der Bypassleitung jeweils diametral gegenüber auf einer durch die Drehachse des Ausbringelementeträgers verlaufenden Geraden liegend und in dem gleichen Abstand zu dieser Drehachse angeordnet sind.

Eine einfache Anordnung der verschiedenen Leitungen in dem Mehrfachdüsenkörper wird dadurch erreicht, dass die sich in Zweigleitungen verzweigende und sich in diametral entgegengesetzter Richtung erstreckenden Zusatzabgangsleitungen zu einem Leitungsgehäuse zusammengefasst sind und die Zweigleitung ein mit der Zusatzabgangsöffnung des Hauptgehäuses zu verbindendes Anschlussstück aufweist.

Um in einfacher Weise den Ausbringelementeträger für die jeweilige Zu- und/oder Abschaltung der verschiedenen Ausbringelemente manuell durch den Bediener durch Verdrehen des Ausbringelementeträgers sicher und gezielt in die richtige Position bringen zu können, ist vorgesehen, dass an der Außenwand des Hauptgehäuses auf einer durch die Drehachse des Ausbringelementeträgers und des Übergabeanschlusses verlaufenden Geraden eine Markierung angeordnet ist. Aufgrund dieser angebrachten Markierung kann der Bediener visuell leicht feststellen, ob der Ausbringelementeträger für die jeweilige Aktivierung oder die Aktivierung des jeweiligen Ausbringelementes für den jeweiligen Einsatz zahlt in die richtige Position gebracht worden ist.

Um durch manuelles Verdrehen durch den Bediener den Ausbringelementeträger zur Aktivierung der seitlich und beabstandet zu dem Ausbringelementeträger angeordneten weiteren Ausbringelementen über die Bypassleitung einfach und sicher in die richtige Position bringen zu können, ist vorgesehen, dass auf der unteren Fläche des Ausbringelementeträgers deckungsgleich zu der Eingangsöffnung und/oder der Ausgangsöffnung der Bypassleitung zumindest ein die Lage und/oder Position dieser Öffnungen anzeigendes Markierungselement angeordnet ist.

Bei einem Mehrfachdüsenkörper, der in Einbauposition des Mehrfachdüsenkörper an dem Spritzgestänge so angeordnet ist, dass die Drehachse des Ausbringelementeträgers in einer Richtung gegenüber der Senkrechten um einen Winkel zwischen 10° und 30°, vorzugsweise etwa 20° geneigt ist, ist vorgesehen, dass die Drehachse in einer quer sich zur Fahrtrichtung erstreckenden und durch das Spritzgestänge verlaufenden senkrechten Ebene sich erstreckt und in dieser Ebene zur Seite geneigt ausgerichtet ist. Hierdurch wird eine verbesserte Ausrichtung und Anordnung des jeweils aktiven als Spritzdüse ausgebildeten Ausbringelementes erreicht, so dass der von der Spritzdüse erzeugte Spritzfächer der zugeführten Flüssigkeit sich ungehindert von den übrigen an dem Ausbringelementeträger angeordneten Ausbringelementen ausbilden kann.

Die ungehinderte Ausbildung des von einer Spritzdüse erzeugten Streufächers wird zusätzlich dadurch verbessert, dass die Kupplungsstutzen in radialer Richtung gegenüber der unteren Ebene des Ausbringelementeträgers in einem Winkel von zumindest annähernd 90° zu der unteren Ebene des Ausbringelementeträgers angeordnet sind, und dass der jeweilige Kupplungsstutzen, wenn sein Übernahmeanschluss mit dem Übergabeanschluss des Hauptgehäuse verbunden ist, in tangentialer Richtung zu der unteren Ebene des Ausbringelementeträgers in einem der Neigung der Drehachse zumindest annähernd entsprechenden Winkel entgegen zur Neigung der Drehachse geneigt angeordnet ist.

Besonders bei kurz bauenden Spritzdüsen lässt sich die ungehinderte Ausbildung des Spritzfächers, ohne dass sie von den benachbarten Ausbringelementen gestört wird, noch dadurch verbessern, dass zumindest einer der Kupplungsstutzen eine andere Länge, gemessen zwischen der unteren Ebene des Ausbringelementeträgers und seinen freien Ende, als die übrigen Kupplungsstutzen aufweist. Durch die verlängerte Ausgestaltung des Kupplungsstutzen kann in vorteilhafter und kostengünstiger Weise auf bisher gesonderte zusätzliche der Verlängerung dienende Überbrückungsstücke zwischen der Spritzdüse und dem Kupplungsstutzen verzichtet werden. Außerdem wird vermieden, dass die bisher erforderlichen zusätzlichen Überbrückungsstücke verloren gehen können, so dass immer eine optimierte Anordnung auch kurz bauender Ausbringelemente, beispielsweise Spritzdüsen gewährleistet ist.

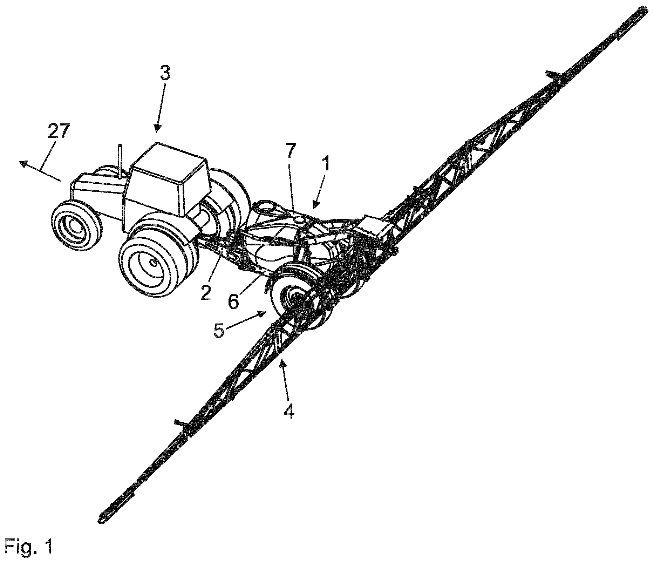

Weitere Einzelheiten der Erfindung sind der Beispielsbeschreibung und den Zeichnungen zu entnehmen. Die Zeichnungen zeigen
- Fig.1: eine landwirtschaftliche Feldspritze mit einem sich in Arbeitsstellung befindlichen Verteilergestänge mit als Spitzdüsen ausgebildeten Ausbringelementen in perspektivischer und Prinzipdarstellung,

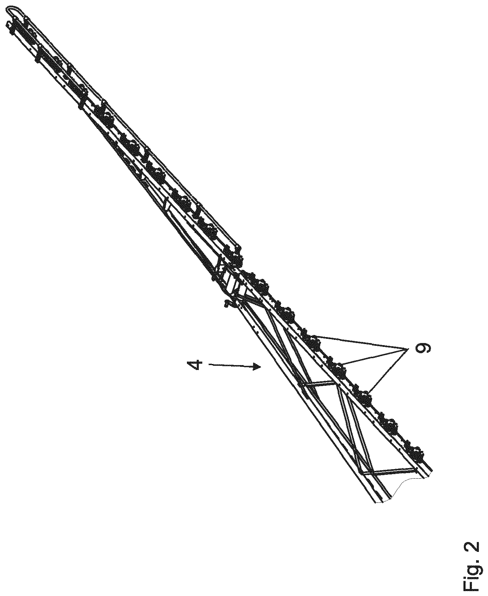

- Fig.2: der rechte äußere Teilbereich des Verteilergestänges mit daran angeordneten Mehrfachdüsenkörpern nach Fig.1 in gleicher Darstellungsweise, jedoch im vergrößerten Maßstab,

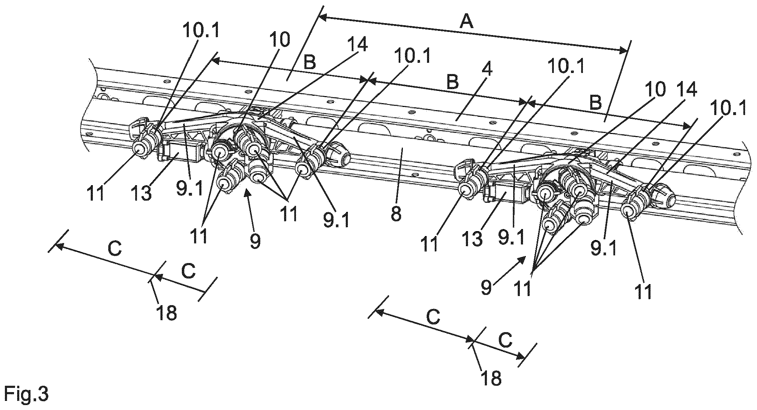

- Fig.3: einen Teilbereich des Verteilergestänges mit daran angeordneten erfindungsgemäßen Mehrfachdüsenkörpern nach Fig.2, jedoch in perspektivischer Ansicht von schräg unten und im vergrößerten Maßstab,

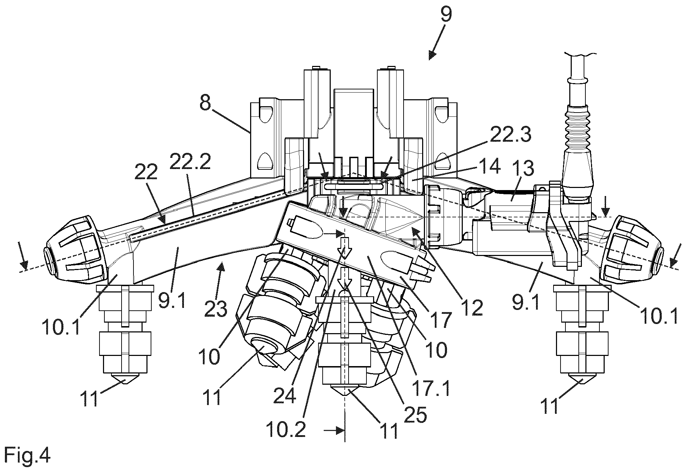

- Fig.4: den erfindungsgemäßen Mehrfachdüsenkörper nach Fig.3 in vergrößerten Maßstab und in der Ansicht von hinten,

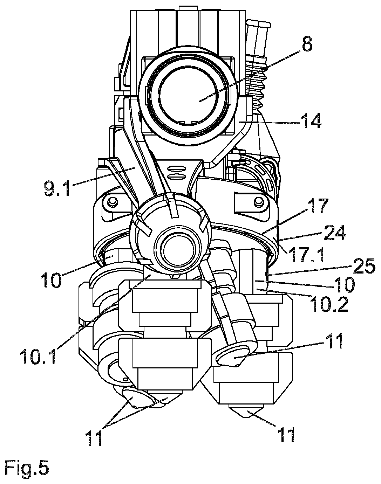

- Fig.5: den erfindungsgemäßen Mehrfachdüsenkörper nach Fig.3 in vergrößerten Maßstab und in der Seitenansicht von links,

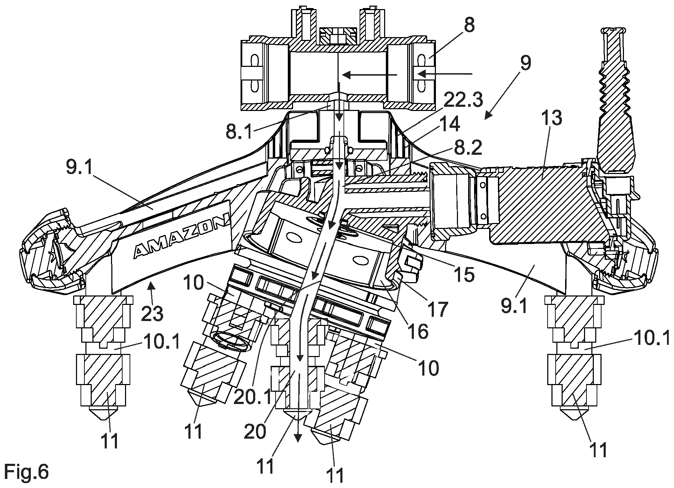

- Fig.6: den Mehrfachdüsenkörper in Schnitt- und in vereinfachter Prinzipdarstellung, wobei der mittlere untere Bereich mit dem drehbaren Ausbringelementeträger im Schnitt VIA - VIA, die jeweils beiden äußeren Bereiche im Schnitt VIB - VIB und Ventilbereich im Schnitt VIC - VIC , wobei der Ausbringelementeträger in eine Position gedreht ist, in welcher die Zuleitung der auszubringenden Flüssigkeit mit einer Abgangsleitung in dem drehbaren Ausbringelementeträger und einem an dem Kupplungsstutzen des Ausbringelementeträgers angeordnetem Ausbringelement verbunden ist, mit eingezeichnetem Flüssigkeitsstromverlauf dargestellt sind,

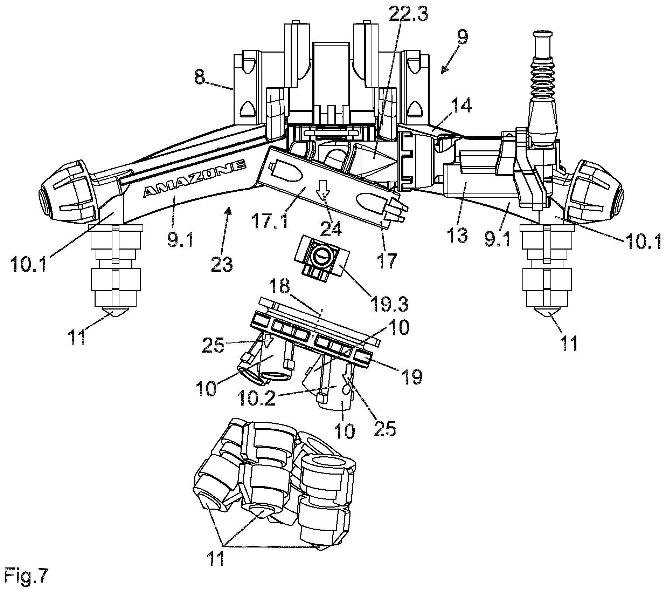

- Fig.7: den Mehrfachdüsenkörper in der Ansicht gemäß Fig.4 und in teilweiser Explosionsdarstellung,
- Fig.8: der äußere Gehäuseteil für den drehbaren Ausbringelementeträger des Mehrfachdüsenkörpers in perspektivischer Darstellung,

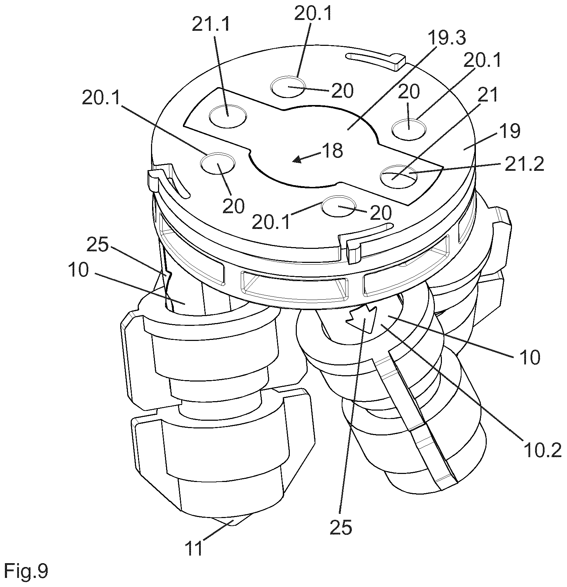

- Fig.9: den drehbaren Ausbringelementeträger in perspektivischer Ansicht mit den daran angeordneten als Spritzdüsen ausgebildeten Ausbringelementen,

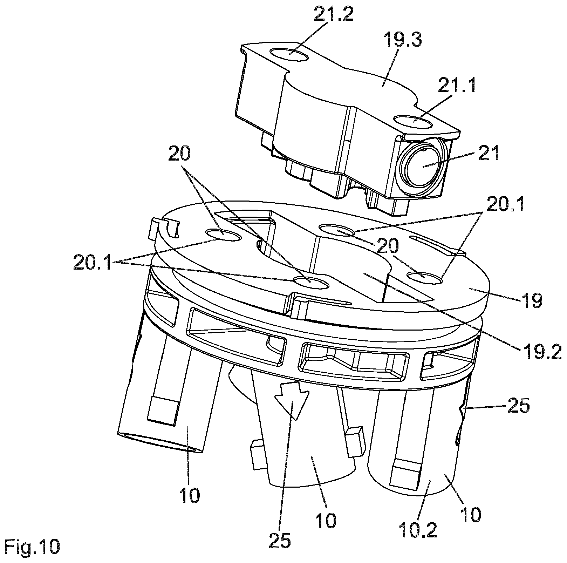

- Fig.10: den drehbaren Ausbringelementeträger ohne daran angeordnete Ausbringelemente in Explosionsdarstellung und perspektivischer Ansicht,

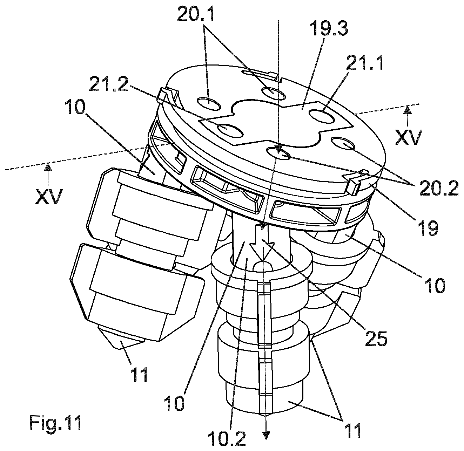

- Fig.11: den drehbaren Ausbringelementeträger in perspektivischer Ansicht mit den daran angeordneten als Spritzdüsen ausgebildeten Ausbringelementen mit eingezeichnetem Flüssigkeitsstromverlauf,

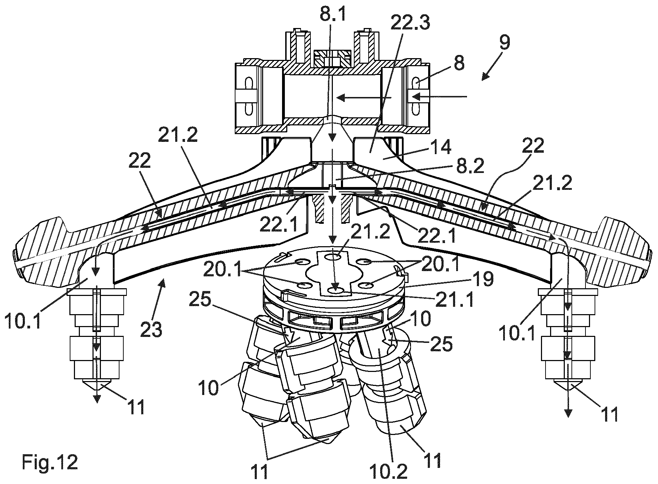

- Fig.12: den Mehrfachdüsenkörper in übersichtlicher Schnittdarstellung, wobei der Übersichtlichkeit der äußere Gehäuseteil für den drehbaren Ausbringelementeträger nicht dargestellt ist, wobei der mittlere untere Bereich mit dem drehbaren Ausbringelementeträger im Schnitt VIA - VIA, die jeweils beiden äußeren Bereiche im Schnitt VIB - VIB und Ventilbereich im Schnitt VIC - VIC, wobei der Ausbringelementeträger in Position gedreht ist, in welcher die Zuleitung der auszubringenden Flüssigkeit mit einer Zusatzabgangsleitung und einem an dem Kupplungsstutzen des Ausbringelementeträgers angeordnetem Ausbringelement verbunden ist, mit eingezeichnetem Flüssigkeitsstromverlauf dargestellt sind,
- Fig.13: den Mehrfachdüsenkörper in teilweiser Explosionsdarstellung in perspektivischer Darstellungsweise, wobei der obere und untere Teil in der Ansicht aus unterschiedlichen Sichtwinkeln zur besseren und verständlichen Darstellung des Flüssigkeitsverlaufes dargestellt sind,

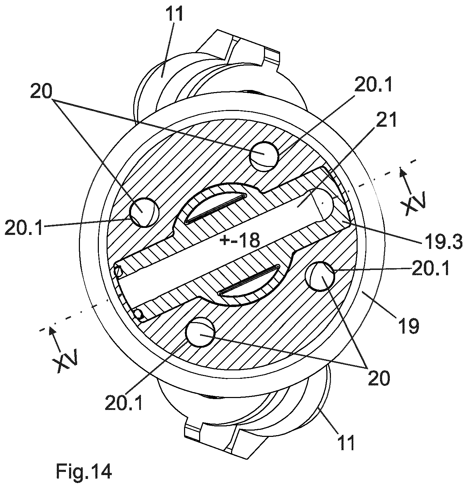

- Fig.14: den drehbaren Ausbringelementeträger im Schnitt XIV - XIV,

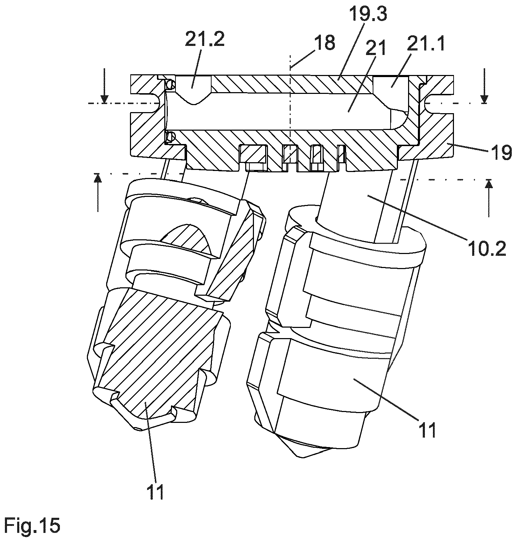

- Fig.15: den drehbaren Ausbringelementeträger im Schnitt XV - XV,

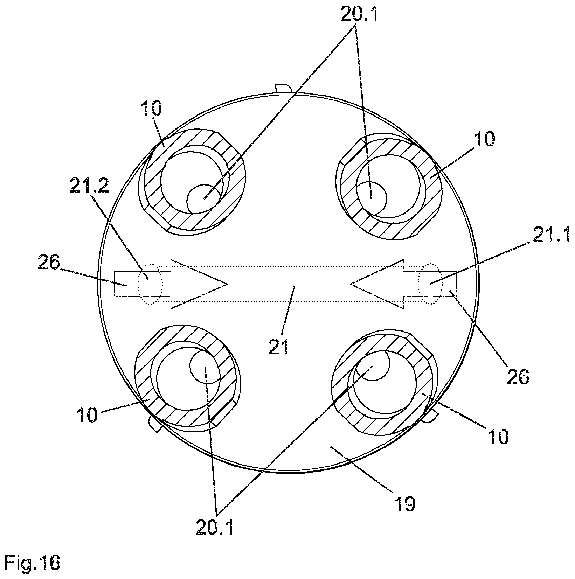

- Fig.16: den Ausbringelementeträger in der Ansicht XVI - XVI,
- Fig.17: die landwirtschaftliche Feldspritze mit einem sich in Arbeitsstellung befindlichen Verteilergestänge mit als Schleppschläuchen ausgebildeten Ausbringelementen in perspektivischer und Prinzipdarstellung,
- Fig.18: der rechte äußere Teilbereich des Verteilergestänges mit an den Mehrfachdüsenkörpern angeordneten Schleppschläuchen nach Fig.17 in gleicher Darstellungsweise, jedoch im vergrößerten Maßstab,
- Fig.19: einen Teilbereich des Verteilergestänges mit an den Mehrfachdüsenkörpern angeordneten Schleppschläuchen nach Fig.17, jedoch in der perspektivischer Ansicht von schräg unten und im vergrößerten Maßstab und
- Fig.20 den: erfindungsgemäßen Mehrfachdüsenkörper mit daran angeordneten Schleppschläuchen nach Fig.19 in vergrößerten Maßstab und in der Ansicht von hinten.

Die gezogene landwirtschaftliche Feldspritze 1 ist über die Deichsel 2 an den Ackerschlepper 3 angekoppelt. Die Feldspritze weist das als Verteilergestänge 4 ausgebildete Spritzgestänge, das Fahrwerk 5 und den auf dem Rahmen 6 angeordneten Vorratsbehälter 7 auf. An dem Verteilergestänge 4 sind in gleichmäßigen Abständen an der am Verteilergestänge 4 angeordneten Flüssigkeitszuleitung 8 die Anschlußelemente für die Mehrfachdüsenkörper 9 mit Kupplungsstutzen 10 und 10.1 zum Anschluss von als Spritzdüsen 11 ausgebildeten Ausbringelementen angeordnet. Der Flüssigkeitszuleitung 8 wird die sich in dem Vorratsbehälter 7 befindliche Spritzflüssigkeit über eine nicht dargestellte Pumpe und Dosiereinrichtungen in einstellbaren Mengen zugeführt.

Die Düsenkörpergehäuse sind als Mehrfachdüsenkörper 9 mit mehreren Kupplungsstutzen 10 und 10.1 zur Anordnung der Spritzdüsen 11 ausgebildet. In den Mehrfachdüsenkörpern 9 sind jeweils als Ventilanordnung 12 ausgebildete Abschaltelemente mit fernbedienbaren Schaltelementen 13 angeordnet. Über diese Abschaltelemente kann die Flüssigkeitszufuhr zu den jeweiligen Kupplungssstutzen 10 und 10.1 und den daran angeordneten Spritzdüsen 11 zugeschaltet oder abgeschaltet werden. Die fernbedienbaren Schaltelemente 13 der Abschaltelemente werden über eine Bedienungseinrichtung mit zugeordneter Steuerungseinrichtung, die als Bordcomputer, der auf dem Ackerschlepper 3 angeordnet ist, ausgebildet sein kann, angesteuert. Somit können über die Steuerungseinrichtung die Abschaltelemente zur Zu- und Abschaltung der Flüssigkeitszufuhr zu den Spritzdüsen 11 jeweils separat geschaltet werden.

Die Mehrfachdüsenkörper 9 sind in einem Abstand A von 50 cm zueinander an dem Verteilergestänge 4 angeordnet. Die beiden äußeren Kupplungsstutzen 10.1 mit den als Spritzdüsen 11 ausgebildeten Ausbringelementen des Mehrfachdüsenkörpers 9 sind in einem Abstand B von 25 cm zueinander angeordnet. Weiterhin sind die jeweils äußeren einander benachbarten Kupplungsstutzen 10.1 benachbarter Mehrfachdüsenkörper 9 ebenfalls in einem Abstand B von 25 cm zueinander angeordnet. Somit sind die äußeren Kupplungsstutzen 10.1 jeweils in einem Abstand C von 12,5 cm zu der Drehachse 18 des verdrehbaren Ausbringelementeträgers 19 angeordnet.

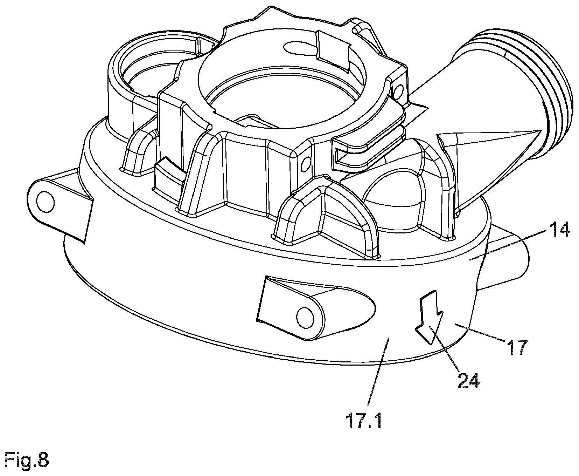

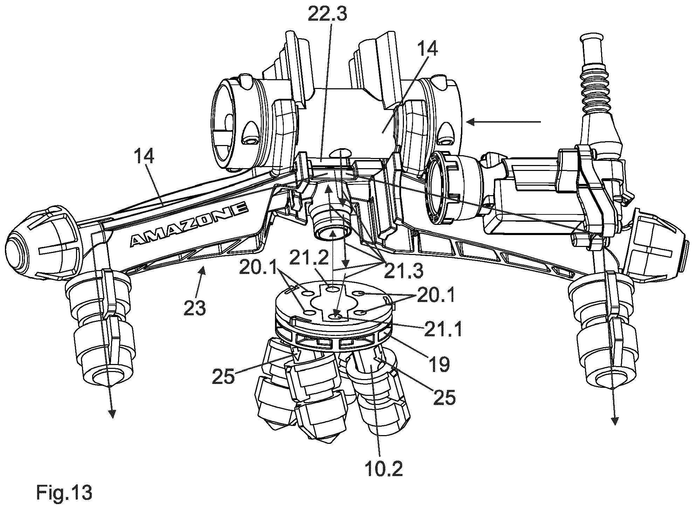

Jeder Mehrfachdüsenkörper 9 weist ein an die Flüssigkeitszuleitung 8 über die Zuleitung 8.1 angeschlossenes Hauptgehäuse 14 auf, wobei die Zuleitung 8.1 jeweils einen Teil der Flüssigkeitszuleitung 8 bildet. In dem Bereich des Hauptgehäuses 14 zweigt von der Zuleitung 8.1 eine Zuflussleitung 8.2 mit einem Übergabeanschluss 15 ab. Auf der Unterseite weist das Hauptgehäuse 14 eine kreisförmige Vertiefung 16 mit einem umlaufenden kreisförmigen Rand 17 auf, wobei in den Fig. 12 und 13 der untere Bereich des Hauptgehäuses 14 mit dem umlaufenden kreisförmigen Rand 17, welches den Fig. 8 dargestellt ist, aus

Übersichtlichkeitsgründen in der Darstellung weggelassen wurde. In der kreisförmigen Vertiefung 16 des Hauptgehäuses 14 ist ein um seine zentrale Drehachse 18 frei drehbarer und in verschiedene Positionen einstellbarer Ausbringelementeträger 19 angeordnet. Der Ausbringelementeträger 19 weist mehrere wahlweise mit dem Übergabeanschluss 15 der Zuflussleitung 8.1 für die jeweilige Ausbringposition verbindbare und jeweils einen Übernahmeanschluss 20.1 aufweisende Verbindungsleitungen 20 auf. Im Bereich jeder Verbindungsleitung 20 sind auf der untere Ebene 19.1 des Ausbringelementeträgers 19 jeweils als Kupplungsstutzen ausgebildete Kupplungsstutzen 10 zur Anordnung von als Spritzdüsen 11 ausgebildeten Ausbringelementen angeordnet. Die Verbindungsleitungen 20 münden dann jeweils an den freien Enden der Kupplungsstutzen 10 aus. An den freien Enden der Kupplungsstutzen 10 sind, bevorzugt mit einem Bajonettverschluss, Ausbringelemente in Form von Spritzdüsen 11 angeordnet. Der Ausbringelementeträger 19 ist in verschiedene Positionen zu drehen, so dass je nach Position des Ausbringelementeträgers 19 eine andere Verbindungsleitung 20 mit dem Übergabeanschluss 15 der Zuflussleitung 8.2 verbunden ist, so dass der jeweils gewünschten Spritzdüse 11 die Spritzflüssigkeit zugeführt und über diese ausgebracht wird.

In dem Ausbringelementeträger 19 ist eine weitere Eingangsöffnung 21.1 und Ausgangsöffnung 21.2 aufweisende Bypassleitung 21 angeordnet. Die Bypassleitung 21 mit der Eingangsöffnung 21.1 und der Ausgangsöffnung 21.2 sind im Ausführungsbeispiel in einem in eine Aussparung 19.2 des Ausbringelementeträgers 19 einsetzbaren Teilstück 19.3 angeordnet.

In dem Hauptgehäuse 14 ist darüber hinaus eine Zusatzabgangsöffnung 22.1 mit sich daran anschließenden und sich in zwei Zweigleitungen 22.2 verzweigende und sich in diametral entgegengesetzter Richtung weisende Zusatzabgangsleitungen 22 angeordnet. Die Zusatzabgangsleitungen 22 befinden sich in mit dem Hauptgehäuse verbundenen Verbindungsarmen 9.1. An den freien Enden der jeweiligen Zusatzabgangsleitung 22 ist jeweils zumindest ein Kupplungsstutzen 10.1 zur Anordnung von Ausbringelementen 11 angeordnet. Die Kupplungsstutzen 10.1 sind jeweils in einem Abstand von 12,5 cm zu der Drehachse 18 des verdrehbaren Ausbringelementeträgers 18 angeordnet. Die den Zusatzabgangsleitungen 22 eines Mehrfachdüsenkörpers 9 zugeordneten Kupplungsstutzen 10 weisen zumindest einen Abstand von 25cm zueinander auf.

An dem verdrehbaren Ausbringelementeträger 19 eines Mehrfachdüsenkörpers 9 sind vier Kupplungsstutzen 10 angeordnet. Die vier Kupplungsstutzen 10 und die zugeordnete Übernahmeanschlüsse 20.1 aufweisenden Verbindungsleitungen 20 sind zumindest annähernd gleichmäßig auf einem Kreis verteilt an dem Ausbringelementeträger 19 angeordnet. Die Eingangsöffnung 21.1 und die Ausgangsöffnung 21.2 der Bypassleitung 21 sind ebenfalls auf dem Kreis, auf dem die Übernahmeanschlüsse 20.1 der Verbindungsleitungen 20 für die Kupplungsstutzen 10 liegen, angeordnet sind. Der Übergabeanschluss 15 und die Zusatzabgangsöffnung 22.1 sind ebenfalls auf dem Kreis, auf dem die Übernahmeanschlüsse 20.1 der Verbindungsleitungen 20 für die Kupplungsstutzen 10 liegen, angeordnet. Der Übergabeanschluss 15 und die Zusatzabgangsöffnung 22.1 sind in dem Hauptgehäuse 14 sowie die Eingangsöffnung 21.1 und die Ausgangsöffnung 21.2 der Bypassleitung 21 jeweils diametral gegenüber auf einer durch die Drehachse 18 des Ausbringelementeträgers 19 verlaufenden Geraden liegend und in dem gleichen Abstand zu dieser Drehachse 18 angeordnet.

Die sich in Zweigleitungen 22.2 verzweigende und sich in diametral entgegengesetzter Richtung erstreckenden Zusatzabgangsleitungen 22 mit den Verbindungsarmen 9.1 sind zu einem Leitungsgehäuse 23 zusammengefasst und die Zweigleitung 22.2 weist ein mit der Zusatzabgangsöffnung 22.1 des Hauptgehäuses 14 zu verbindendes Anschlussstück 22.3 auf.

An der Außenwand 17.1 des Hauptgehäuses 14 ist auf einer durch die Drehachse 18 des Ausbringelementeträgers 19 und des Übergabeanschlusses 15 verlaufenden Geraden eine im Ausführungsbeispiel als nach unten weisender erster Pfeil 24 ausgebildete Markierung angeordnet. An den Außenseiten der Kupplungsstutzen 10 sind jeweils eine nach unten weisender erster Pfeil 24 ausgebildete Markierung angeordnet als nach unten weisender zweiter Pfeil 25 ausgebildete Markierung angebracht. Wenn durch Verdrehen des Ausbringelementeträgers 19 der jeweils zweite Pfeil 25 des jeweiligen Kupplungsstutzens 10 mit der zur jeweils zum Einsatz kommenden Spritzdüse 11 auf den ersten Pfeil 24 weist, ist die jeweilige Verbindungsleitung 20 des Kupplungsstutzens 10 mit dem Übergabeanschluss 15 verbunden, so dass in gewünschter Weise der zum Einsatz kommenden Spritzdüse 11 die ausbringende Spritzflüssigkeit zugeführt wird. Der Flüssigkeitsverlauf ist durch die Pfeile 21.3 in vereinfachter Weise prinzipiell in Figur 13 dargestellt.

Auf der unteren Fläche 19.1 des Ausbringelementeträgers 19 sind deckungsgleich zu der Eingangsöffnung 21.1 und/oder der Ausgangsöffnung 21.2 der Bypassleitung 21 zumindest ein die Lage und/oder Position dieser Öffnungen 21.1 und 21.2 anzeigende und im Ausführungsbeispiel als dritte Pfeile ausgebildete Markierungselemente 26 angeordnet. Wenn durch Verdrehen des Ausbringelementeträgers 19 einer der dritten Pfeile 26des jeweiligen Kupplungsstutzens 10 auf den ersten Pfeil 24 weist, ist die die Eingangsöffnung 21.1 der Bypassleitung 21 mit dem Übergabeanschluss 15 und die Ausgangsöffnung 21.2 der Bypassleitung 21 mit Zusatzabgangsöffnung 22.1 und den zu den äußeren Kupplungsstutzen 10.1 führenden Zusatzabgangsleitungen 22 und Zweigleitungen 22.2 verbunden, so dass in gewünschter Weise der am äußeren Kupplungsstutzen 10.1 zum Einsatz kommenden Spritzdüse 11 oder dort angeordnetem Schleppschlauch 28 die ausbringende Spritzflüssigkeit zugeführt wird.

In Einbauposition des Mehrfachdüsenkörper 9 an dem als Verteilergestänge 4 ausgebildeten Spritzgestänge ist die Drehachse 18 des Ausbringelementeträgers 19 in einer sich in Längsrichtung der Gestänges 4 in senkrechter Ebene erstreckenden, aufrechten Fläche und in einer Richtung gegenüber der Senkrechten um einen Winkel zwischen 10° und 30°, vorzugsweise etwa 20° geneigt. Die Drehachse 18 erstreckt sich in einer quer zur Fahrtrichtung 27 erstreckenden und durch das Spritzgestänge 4 verlaufenden senkrechten Ebene und ist in dieser Ebene zur Seite geneigt ausgerichtet ist. Die Drehachse 18 und die untere Ebene 19.1 des Ausbringelementeträgers 19 erstrecken sich im rechten Winkel zur Drehachse 18 des Ausbringelementeträgers 19.

Die an unter Ebene 19.1 des Ausbringelementeträgers 19 angeordneten Kupplungsstutzen 10 sind in radialer Richtung gegenüber der unteren Ebene 19.1 des Ausbringelementeträgers 19 in einem Winkel von zumindest annähernd 90° zu der unteren Ebene 19.1 des Ausbringelementeträgers 19 angeordnet. Der jeweilige Kupplungsstutzen 10, wenn sein Übernahmeanschluss 20.1 mit dem Übergabeanschluss 15 des Hauptgehäuse 14 verbunden ist, ist in tangentialer Richtung zu der unteren Ebene 19.1 des Ausbringelementeträgers 19 in einem der Neigung der Drehachse 18 zumindest annähernd entsprechenden Winkel entgegen zur Neigung der Drehachse 18 geneigt angeordnet. Hierdurch ist sichergestellt, dass das jeweils aktive Ausbringelement 11 und der zugehörige Kupplungsstutzen 10 senkrecht nach unten ausgerichtet ist.

Einer der Kupplungsstutzen 10, im Ausführungsbeispiel der Kupplungsstutzen 10.2 weist eine andere Länge, gemessen zwischen der unteren Ebene 19.1 des Ausbringelementeträgers 19 und seinen freien Ende, als die übrigen Kupplungsstutzen 10 auf. Hieran werden in der Regel besonders kurz bauende Ausbringelemente angeordnet.

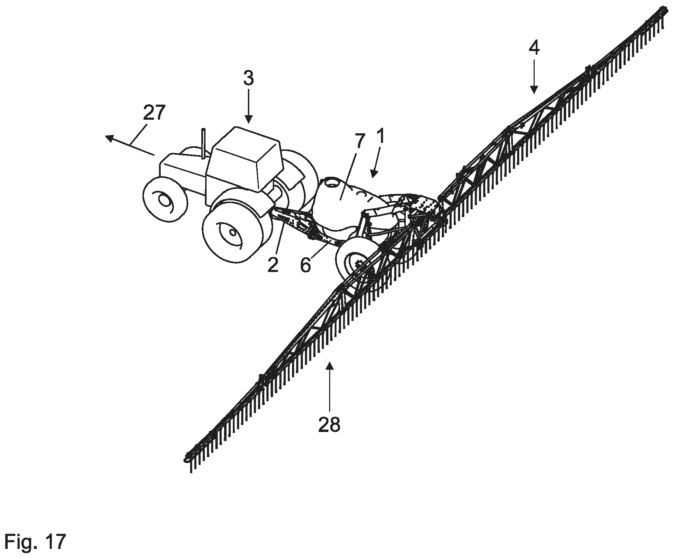

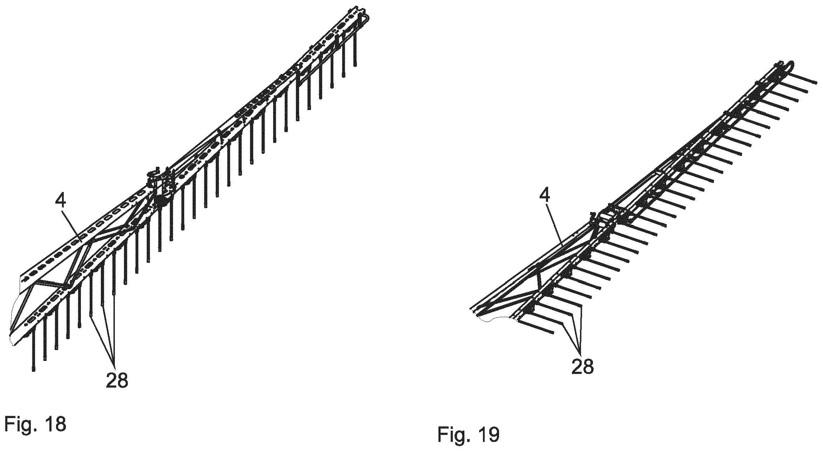

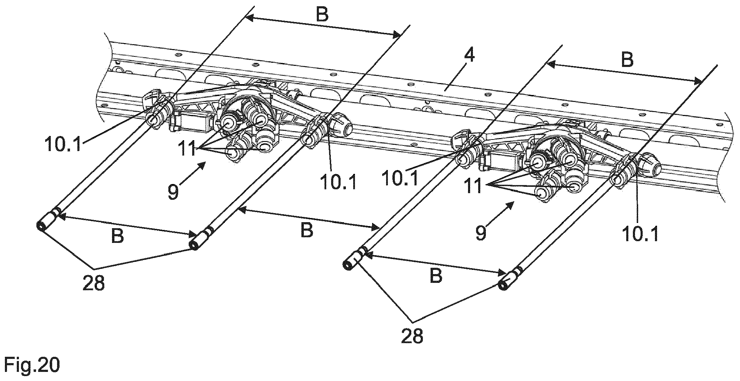

Gemäß dem Ausführungsbeispiel nach Fig. 17 bis 20 sind jeweils an den beiden äußeren Kupplungsstutzen 10.1 eines Mehrfachdüsenkörpers 9 sogenannte Schleppschläuche 28, so dass er die Schleppschläuche 28 in einem Abstand B von 25 cm zueinander angeordnet sind. An dem in der Mitte des Mehrfachdüsenkörpers 9 sich befindlichen verdrehbaren Ausbringelementeträger 19 sind Spritzdüsen 11 angeordnet.

Somit ist also leicht zu erkennen, dass in dem Ausführungsbeispiel an den äußeren Kupplungsstutzen 10.1 wahlweise Spritzdüsen 11 oder Schleppschläuche 28 angeordnet werden können.

## Patentansprüche

1. Mehrfachdüsenkörper (9) zur Anordnung an einem sich quer zur Fahrtrichtung (27) der Feldspritze (1) erstreckenden Spritzgestänge (4) einer landwirtschaftliche Feldspritze (1) mit einem an eine Zuleitung (8.1) angeschlossenen Hauptgehäuse (14), wobei von der Zuleitung (8.1) zumindest eine Zuflussleitung (8.2) mit einem Übergabeanschluss (15) abzweigt, wobei auf der Unterseite des Hauptgehäuses (14) ein um seine zentrale Drehachse (18) frei drehbares und in verschiedene Positionen einstellbarer Ausbringelementeträger (19) angeordnet ist, wobei der Ausbringelementeträger (19) mehrere wahlweise mit dem Übergabeanschluss (15) der Zuflussleitung (8.2) für die jeweilige Ausbringposition verbindbare und jeweils einen Übernahmeanschluss (20.1) aufweisende Verbindungsleitung (20) aufweisen, wobei die Verbindungsleitungen (20) jeweils an den freien Enden von an der untere Ebene (19.1) des Ausbringelementeträgers (19) angeordnete Kupplungsstutzen (10) zur Anordnung von Ausbringelementen (11) ausmünden, **dadurch gekennzeichnet, dass** in dem Ausbringelementeträger (19) eine Eingangsöffnung (21.1) und Ausgangsöffnung (21.2) aufweisende Bypassleitung (21) angeordnet ist, dass in dem Hauptgehäuse (14) eine Zusatzabgangsöffnung (22.1) mit sich daran anschließenden in zwei Zweigleitungen (22.2) verzweigende und sich in diametral entgegengesetzter Richtung weisende Zusatzabgangsleitungen (22.1) angeordnet ist, dass an den freien Enden der jeweiligen Zusatzabgangsleitung (22.1) jeweils zumindest ein Kupplungsstutzen (10.1) zur Anordnung von Ausbringelementen (11, 28) angeordnet ist, dass die Kupplungsstutzen (10.1) jeweils in einem Abstand (C) von 12,5 cm zu der Drehachse (18) des verdrehbaren Ausbringelementeträgers (19) angeordnet sind.

2. Mehrfachdüsenkörper (9) nach Anspruch 1, **dadurch gekennzeichnet, dass** die den Zusatzabgangsleitungen (22.1) eines Mehrfachdüsenkörpers (9) zugeordneten Kupplungsstutzen (10.1) zumindest einen Abstand (B) von 25 cm zueinander aufweisen.

3. Mehrfachdüsenkörper (9) nach zumindest einem der vorstehenden Ansprüche, **dadurch gekennzeichnet, dass** vier Kupplungsstutzen (10) und die zugeordneten Übernahmeanschlüsse (20.1) aufweisenden Verbindungsleitungen zumindest annähernd gleichmäßig auf einem Kreis verteilt an dem Ausbringelementeträger (19) angeordnet sind, dass die Eingangsöffnung (21.1) und die Ausgangsöffnung (21.2) der Bypassleitung (21) ebenfalls auf dem Kreis, auf dem die Übernahmeanschlüsse (20.1) der Verbindungsleitungen (20) für die Kupplungsstutzen (10) liegen, angeordnet sind, und dass der Übergabeanschluss (15) und die Zusatzabgangsöffnung (22.1) ebenfalls auf dem Kreis, auf dem die Übernahmeanschlüsse (20.1) der Verbindungsleitungen (20) für die Kupplungsstutzen (10) liegen, angeordnet sind.

4. Mehrfachdüsenkörper (9) nach Anspruch 3, **dadurch gekennzeichnet, dass** der Übergabeanschluss (15) und die Zusatzabgangsöffnung (22.1) in dem Hauptgehäuse (14) sowie die Eingangsöffnung (21.1) und die Ausgangsöffnung (21.2) der Bypassleitung (21) jeweils diametral gegenüber auf einer durch die Drehachse (18) des Ausbringelementeträgers (19) verlaufenden Geraden liegend und in dem gleichen Abstand zu dieser Drehachse (18) angeordnet sind.

5. Mehrfachdüsenkörper (9) nach zumindest einem der vorstehenden Ansprüche, **dadurch gekennzeichnet, dass** die sich in Zweigleitungen (22.2) verzweigende und sich in diametral entgegengesetzter Richtung erstreckenden Zusatzabgangsleitungen (22) zu einem Leitungsgehäuse (23) zusammengefasst sind und die Zweigleitung (22.2) ein mit der Zusatzabgangsöffnung (22.1) des Hauptgehäuses (14) zu verbindendes Anschlussstück (22.3) aufweist.

6. Mehrfachdüsenkörper (9) nach zumindest einem der vorstehenden Ansprüche, **dadurch gekennzeichnet, dass** an der Außenwand (17.1) des Hauptgehäuses (14) auf einer durch die Drehachse (18) des Ausbringelementeträgers (19) und des Übergabeanschlusses (15) verlaufenden Geraden eine Markierung (24) angeordnet ist.

7. Mehrfachdüsenkörper (9) nach zumindest einem der vorstehenden Ansprüche, **dadurch gekennzeichnet, dass** auf der unteren Ebene (19.1) des Ausbringelementeträgers (19) deckungsgleich zu der Eingangsöffnung (21.1) und/oder der Ausgangsöffnung (21.2) der Bypassleitung (21) zumindest ein die Lage und/oder Position dieser Öffnungen anzeigendes Markierungselement (26) angeordnet ist.

8. Mehrfachdüsenkörper (9) nach zumindest einem der vorstehenden Ansprüche, wobei in Einbauposition des Mehrfachdüsenkörper (9) an dem Spritzgestänge (4) die Drehachse (18) des Ausbringelementeträgers (19) in einer Richtung gegenüber der Senkrechten um einen Winkel zwischen 10° und 30°, vorzugsweise etwa 20° geneigt ist, **dadurch gekennzeichnet, dass** die Drehachse (18) in einer quer sich zur Fahrtrichtung (27) erstreckenden und durch das Spritzgestänge (4) verlaufenden senkrechten Ebene sich erstreckt und in dieser Ebene zur Seite geneigt ausgerichtet ist.

9. Mehrfachdüsenkörper (9) nach Anspruch 8, **dadurch gekennzeichnet, dass** die Kupplungsstutzen (10) in radialer Richtung gegenüber der unteren Ebene (19.1) des Ausbringelementeträgers (19) in einem Winkel von zumindest annähernd 90° zu der unteren Ebene (19.1) des Ausbringelementeträgers (19) angeordnet sind, und dass der jeweilige Kupplungsstutzen (10), wenn sein Übernahmeanschluss (20.1) mit dem Übergabeanschluss (15) des Hauptgehäuse (14) verbunden ist, in tangentialer Richtung zu der unteren Ebene (19.1) des Ausbringelementeträgers (19) in einem der Neigung der Drehachse (18) zumindest annähernd entsprechenden Winkel entgegen zur Neigung der Drehachse (18) geneigt angeordnet ist.

10. Mehrfachdüsenkörper (9) nach zumindest einem der vorstehenden Ansprüche, **dadurch gekennzeichnet, dass** zumindest einer der Kupplungsstutzen (10.2) eine andere Länge, gemessen zwischen der unteren Ebene des Ausbringelementeträgers (19) und seinen freien Ende, als die übrigen Kupplungsstutzen (10) aufweist.

## Claims

1. Multiple nozzle body (9) for arranging on a spray boom (4), extending transversely to the direction of travel (27) of the field sprayer (1), of an agricultural field sprayer (1), having a main housing (14) connected to a feed line (8.1), wherein at least one inflow line (8.2) with a delivery port (15) branches off from the feed line (8.1), wherein a dispensing-element carrier (19) that is freely rotatable about its central axis of rotation (18) and is settable in different positions is arranged on the underside of the main housing (14), wherein the dispensing-element carrier (19) has a plurality of connecting lines (20) that are selectively connectable to the delivery port (15) of the inflow line (8.2) for the respective dispensing position and each have a receiving port (20.1), wherein the connecting lines (20) each open out at the free ends of coupling connectors (10), arranged in the lower plane (19.1) of the dispensing-element carrier (19), for the arrangement of dispensing elements (11), **characterized in that** a bypass line (21) having an inlet opening (21.1) and an outlet opening (21.2) is arranged in the dispensing-element carrier (19), **in that** an auxiliary outflow opening (22.1) having adjoining auxiliary outflow lines (22.1) that branch into two branch lines (22.2) and face in diametrically opposite directions is arranged in the main housing (14), **in that** in each case at least one coupling connector (10.1) for the arrangement of dispensing elements (11, 28) is arranged at the free ends of the respective auxiliary outflow line (22.1), **in that** the coupling connectors (10.1) are each arranged at a distance (C) of 12.5 cm from the axis of rotation (18) of the rotatable dispensing-element carrier (19).

2. Multiple nozzle body (9) according to Claim 1, **characterized in that** the coupling connectors (10.1) assigned to the auxiliary outflow lines (22.1) of a multiple nozzle body (9) are at least at a distance (B) of 25 cm from one another.

3. Multiple nozzle body (9) according to at least one of the preceding claims, **characterized in that** four connecting lines having coupling connectors (10) and the associated receiving ports (20.1) are arranged on the dispensing-element carrier (19) in a manner distributed at least approximately uniformly on a circle, **in that** the inlet opening (21.1) and the outlet opening (21.2) of the bypass line (21) are likewise arranged on the circle on which the receiving ports (20.1) of the connecting lines (20) for the coupling connectors (10) lie, and **in that** the delivery port (15) and the auxiliary outflow opening (22.1) are likewise arranged on the circle on which the receiving ports (20.1) of the connecting lines (20) for the coupling connectors (10) lie.

4. Multiple nozzle body (9) according to Claim 3, **characterized in that** the delivery port (15) and the auxiliary outflow opening (22.1) in the main housing (14), and the inlet opening (21.1) and the outlet opening (21.2) of the bypass line (21) are each arranged diametrically opposite one another in a manner lying on a straight line extending through the axis of rotation (18) of the dispensing-element carrier (19), and at the same distance from this axis of rotation (18).

5. Multiple nozzle body (9) according to at least one of the preceding claims, **characterized in that** the auxiliary outflow lines (22) that branch into branch lines (22.2) and extend in diametrically opposite directions are combined to form a line housing (23), and the branch line (22.2) has a connection piece (22.3) to be connected to the auxiliary outflow opening (22.1) of the main housing (14).

6. Multiple nozzle body (9) according to at least one of the preceding claims, **characterized in that** a marking (24) is arranged on the outer wall (17.1) of the main housing (14) on a straight line extending through the axis of rotation (18) of the dispensing-element carrier (19) and the delivery port (15).

7. Multiple nozzle body (9) according to at least one of the preceding claims, **characterized in that** at least one marking element (26) is arranged on the lower plane (19.1) of the dispensing-element carrier (19) congruently with the inlet opening (21.1) and/or the outlet opening (21.2) of the bypass line (21), said marking element (26) indicating the location and/or position of these openings.

8. Multiple nozzle body (9) according to at least one of the preceding claims, wherein, in an installed position of the multiple nozzle body (9) on the spray boom (4), the axis of rotation (18) of the dispensing-element carrier (19) is inclined at an angle of between 10° and 30°, preferably about 20°, in one direction with respect to the perpendicular, **characterized in that** the axis of rotation (18) extends in a perpendicular plane extending transversely to the direction of travel (27) and through the spray boom (4), and is oriented in a manner inclined to the side in this plane.

9. Multiple nozzle body (9) according to Claim 8, **characterized in that** the coupling connectors (10) are arranged at an angle of at least approximately 90° to the lower plane (19.1) of the dispensing-element carrier (19) in a radial direction with respect to the lower plane (19.1) of the dispensing-element carrier (19), and **in that** the respective coupling connector (10), when its receiving port (20.1) is connected to the delivery port (15) of the main housing (14), is arranged in a manner inclined counter to the inclination of the axis of rotation (18) at an angle at least approximately corresponding to the inclination of the axis of rotation (18) in a tangential direction to the lower plane (19.1) of the dispensing-element carrier (19).

10. Multiple nozzle body (9) according to at least one of the preceding claims, **characterized in that** at least one of the coupling connectors (10.2) has a different length, measured between the lower plane of the dispensing-element carrier (19) and its free end, than the other coupling connectors (10).

## Revendications

1. Corps à buses multiples (9) destiné à être agencé sur une rampe de pulvérisation (4) d'un pulvérisateur agricole (1) s'étendant transversalement à la direction de conduite (27) du pulvérisateur (1), comprenant un carter principal (14) raccordé à une conduite d'alimentation (8.1), dans lequel au moins une conduite d'afflux (8.2) dotée d'un raccord de transfert (15) bifurque à partir de la conduite d'alimentation (8.1), dans lequel un support d'éléments d'épandage (19) librement rotatif autour de son axe de rotation central (18) et réglable dans différentes positions est disposé sur le côté inférieur du carter principal (14), dans lequel le support d'éléments d'épandage (19) comprend plusieurs conduites de liaison (20) pouvant être reliées sélectivement au raccord de transfert (15) de la conduite d'afflux (8.2) pour la position d'épandage respective et comprenant respectivement un raccord de réception (20.1), dans lequel les conduites de liaison (20) débouchent respectivement au niveau des extrémités libres de tubulures d'accouplement (10) disposées au niveau du plan inférieur (19.1) du support d'éléments d'épandage (19) pour l'agencement d'éléments d'épandage (11), **caractérisé en ce qu'**une conduite de dérivation (21) comprenant une ouverture d'entrée (21.1) et une ouverture de sortie (21.2) est disposée dans le support d'éléments d'épandage (19), **en ce qu'**une ouverture de départ supplémentaire (22.1), comprenant des conduites de départ supplémentaires (22.1) s'y raccordant, bifurquant en deux conduites de branchement (22.2) et orientées dans des sens diamétralement opposés, est disposée dans le carter principal (14), **en ce qu'**au moins une tubulure d'accouplement (10.1) pour l'agencement d'éléments d'épandage (11, 28) est respectivement disposée au niveau des extrémités libres de la conduite de départ supplémentaire (22.1) respective, et **en ce que** les tubulures d'accouplement (10.1) sont disposées respectivement à une distance (C) de 12,5 cm par rapport à l'axe de rotation (18) du support d'éléments d'épandage (19) rotatif.

2. Corps à buses multiples (9) selon la revendication 1, **caractérisé en ce que** les tubulures d'accouplement (10.1) associées aux conduites de départ supplémentaires (22.1) d'un corps à buses multiples (9) sont situées à une distance (B) d'au moins 25 cm les unes par rapport aux autres.

3. Corps à buses multiples (9) selon au moins l'une des revendications précédentes, **caractérisé en ce que** quatre tubulures d'accouplement (10) et des conduites de liaison comprenant les raccords de réception associés (20.1) sont disposées de manière au moins approximativement uniforme sur un cercle sur le support d'éléments d'épandage (19), **en ce que** l'ouverture d'entrée (21.1) et l'ouverture de sortie (21.2) de la conduite de dérivation (21) sont également disposées sur le cercle sur lequel se situent les raccords de réception (20.1) des conduites de liaison (20) pour les tubulures d'accouplement (10), et **en ce que** le raccord de transfert (15) et l'ouverture de départ supplémentaire (22.1) sont également disposés sur le cercle sur lequel les raccords de réception (20.1) des conduites de liaison (20) pour les tubulures d'accouplement (10) sont situés.

4. Corps à buses multiples (9) selon la revendication 3, **caractérisé en ce que** le raccord de transfert (15) et l'ouverture de départ supplémentaire (22.1) dans le carter principal (14) ainsi que l'ouverture d'entrée (21.1) et l'ouverture de sortie (21.2) de la conduite de dérivation (21) sont disposés respectivement diamétralement par rapport à une ligne droite passant par l'axe de rotation (18) du support d'éléments d'épandage (19) et à la même distance de cet axe de rotation (18).

5. Corps à buses multiples (9) selon au moins l'une des revendications précédentes, **caractérisé en ce que** les conduites de départ supplémentaires (22) bifurquant en deux conduites de branchement (22.2) et s'étendant dans des sens diamétralement opposés sont réunies en un carter de conduites (23) et la conduite de branchement (22.2) comprend une pièce de raccordement (22.3) à relier à l'ouverture de départ supplémentaire (22.1) du carter principal (14).

6. Corps à buses multiples (9) selon au moins l'une des revendications précédentes, **caractérisé en ce qu'**un repère (24) est disposé sur la paroi extérieure (17.1) du carter principal (14) sur une ligne droite passant par l'axe de rotation (18) du support d'éléments d'épandage (19) et du raccord de transfert (15).

7. Corps à buses multiples (9) selon au moins l'une des revendications précédentes, **caractérisé en ce qu'**au moins un élément de repère (26) indiquant l'orientation et/ou la position de ces ouvertures est disposé sur le plan inférieur (19.1) du support d'éléments d'épandage (19) en coïncidence avec l'ouverture d'entrée (21.1) et/ou l'ouverture de sortie (21.2) de la conduite de dérivation (21).

8. Corps à buses multiples (9) selon au moins l'une des revendications précédentes, dans lequel, dans la position d'installation du corps à buses multiples (9) sur la rampe de pulvérisation (4), l'axe de rotation (18) du support d'éléments d'épandage (19) est incliné d'un angle compris entre 10° et 30°, de préférence d'environ 20° dans une direction par rapport à la verticale, **caractérisé en ce que** l'axe de rotation (18) s'étend dans un plan s'étendant transversalement à la direction de conduite (27) et passant par la rampe de pulvérisation (4) et est orienté de manière inclinée vers le côté dans ce plan.

9. Corps à buses multiples (9) selon la revendication 8, **caractérisé en ce que** les tubulures d'accouplement (10) sont disposées suivant un angle d'au moins approximativement 90° par rapport au plan inférieur (19.1) du support d'éléments d'épandage (19) dans la direction radiale par rapport au plan inférieur (19.1) du support d'éléments d'épandage (19), et **en ce que** la tubulure d'accouplement respective (10), lorsque son raccord de réception (20.1) est relié au raccord de transfert (15) du carter principal (14), est disposée dans la direction tangentielle par rapport au plan inférieur (19.1) du support d'éléments d'épandage (19) suivant un angle, correspondant au moins approximativement à l'inclinaison de l'axe de rotation (18), opposé à l'inclinaison de l'axe de rotation (18).

10. Corps à buses multiples (9) selon au moins l'une des revendications précédentes, **caractérisé en ce qu'**au moins l'une des tubulures d'accouplement (10.2) présente une autre longueur, mesurée entre le plan inférieur du support d'éléments d'épandage (19) et son extrémité libre, que les autres tubulures d'accouplement (10).
